# EUROPEAN PATENT SPECIFICATION

(11) **EP 4 515 853 B1**
(45) Date of publication and mention of the grant of the patent: **02.09.2026**
(21) Application number: 23728903.8
(22) Date of filing: 04.05.2023
(51) Int. Cl.: H04L 69/22, H04L 67/561, H04L 67/02, H04L 67/00

(54) **FLOW CORRELATION AND HTTP MEDIA CLASSIFICATION**
FLUSSKORRELATION UND HTTP-MEDIENKLASSIFIZIERUNG
CORRÉLATION DE FLUX ET CLASSIFICATION MULTIMÉDIA HTTP

(30) Priority: 05.05.2022 US 202263338716 P
(43) Date of publication of application: 05.03.2025
(73) Proprietor: Huawei Technologies Co., Ltd., Shenzhen, Guangdong 518129 (CN)
(72) Inventor: JOHN, Kaippallimalil Mathew, Carrollton, Texas 75010 (US); XIANG, Zhixian, Frisco, Texas 75035 (US); SABOORIAN, Khosrow Tony, Plano, Texas 75093 (US)
(74) Representative: Gill Jennings & Every LLP
(86) International application number: PCT/US2023/020965
(87) International publication number: WO 2023/133364

(56) References cited:
- WO-A1-2020/223219
- US-A1- 2020 367 114
- HUAWEI ET AL: "KI#5: Solution for differentiated QoS handling for different PDU Sets", vol. SA WG2, no. e-meeting; 20220406 - 20220412, 29 March 2022 (2022-03-29), XP052133251, Retrieved from the Internet <URL:https://ftp.3gpp.org/tsg_sa/WG2_Arch/TSGS2_150E_Electronic_2022-04/Docs/S2-2202409.zip S2-2202409 XRM Solution for KI#5 Differentiated QoS handling for different PDU Sets v1.docx> [retrieved on 20220329]

## Description

### TECHNICAL FIELD

The present disclosure relates generally to methods and system for network communications, and, in particular embodiments, to methods and systems for flow correction and hypertext transfer protocol (HTTP) media classification. "KI#5: Solution for Differentiated QoS Handling for Different PDU Sets", by Huawei, HiSilicon, and KDDI, discloses signaling and processing methods for assigning differentiated QoS to PDU sets. US20200367114A1 discloses a method and apparatus for scheduling data packets using gate queues mapped to inter-packet intervals. WO2020223219A1 discloses communication system configurations for handling traffic flows based on latency sensitivity and uplink prioritization.

### BACKGROUND

Media is sometimes sent across multiple transport connections or streams that need to be coordinated so that they are received within a bounded time (e.g., similar time in extended reality and media services (XRM) study). Currently, policy and control plane information may help define aspects for coordinated transmission of multi modality flows. However, the current solutions do not scale well and are inefficient because each flow that has to be correlated needs explicit per-flow control plane (CP) signaling from the application side (e.g., 3GPP AF) to the 5G core network (5GC) for a user plane function (UPF) to identify a group of correlated streams (e.g., a group of streams that belong to the same media) and apply coordinated transmission policies to the group of streams. That is, the conventional techniques using Internet protocol (IP) connection's 5-tuple, a real time protocol (RTP) synchronization source (SSRC), or other connection/media header fields provisioned are not efficient to uniquely identify a group of correlated streams.

### SUMMARY

Technical advantages are generally achieved, by embodiments of this disclosure which describe methods and apparatus for flow correction and hypertext transfer protocol (HTTP) media classification. The invention is defined by the appended claims.

According to embodiments, a user plane function (UPF) node receives a plurality of packets from an application server. The UPF node identifies one or more packets from the plurality of packets. The one or more packets belong to a session group of media streams for coordinated transmission and having a same value of a media stream coordination identifier (MSCI). The UPF node sends to a base station the one or more packets for the coordinated transmission.

In some embodiments, the UPF node may add the MSCI to a general packet radio service (GRPS) tunneling protocol (GTP)-user plane (GTP-U) extension header of the one or more packets. The UPF node may send the one or more packets with the GTP-U extension header having the MSCI

In some embodiments, the UPF may obtain the MSCI from a real time protocol (RTP) extension header, a corresponding transmission control protocol (TCP) optional header, or a corresponding user datagram protocol (UDP) optional header.

In some embodiments, the UPF node may identify the one or more packets belonging to the session group of media streams for the coordinated transmission based on the MSCI and application identification information. In some embodiments, the application identification information may include a 3-tuple of a source address, a source port, and a protocol type indicated in the one or more packets. In some embodiments, the application identification information may include a serving network slice selection assistance identifier (S-NSSAI) or a data network access identifier (DNAI).

In some embodiments, the UPF node may identify the one or more packets belonging to the session group of media streams for the coordinated transmission based on the corresponding MSCI and importance information of the one or more packets.

In some embodiments, the session group of media streams may share a common clock.

In some embodiments, the coordinated transmission may be performed based on a common configured policy including at least one of a drop policy or a delay policy.

In some embodiments, the session group of media streams may include at least one of an audio stream, a video stream, or a haptics stream of a same media.

According to embodiments, a base station receives a plurality of packets from a UPF node. The base station identifies one or more packets from the plurality of packets. The one or more packets belong to a session group of media streams for coordinated transmission and having a same value of an MSCI. The base station performs the coordinated transmission of the one or more packets.

In some embodiments, the base station may obtain the MSCI from a GTP-U extension header of the one or more packets.

In some embodiments, the base station may obtain the MSCI from a RTP extension header, a corresponding TCP optional header, or a UDP optional header.

In some embodiments, the base station may identify the one or more packets belonging to the session group of media streams for the coordinated transmission based on the MSCI and application identification information. In some embodiments, the application identification information may include a 3-tuple of a source address, a source port, and a protocol type indicated in the one or more packets. In some embodiments, the application identification information may include a S-NSSAI or a DNAI.

In some embodiments, the base station may identify the one or more packets belonging to the session group of media streams for the coordinated transmission based on the MSCI and importance information of the one or more packets.

In some embodiments, the session group of media streams may share a common clock.

In some embodiments, the coordinated transmission may be performed based on a common configured policy including at least one of a drop policy or a delay policy.

In some embodiments, the session group of media streams may include an audio stream, a video stream, and a haptics stream of a same media.

According to embodiments, a UPF node receives a configuration from a 5G core network (5GC) node. The configuration indicates that a plurality of media streams belong to a session group of media streams. The UPF node receives a plurality of packets from an application server. The UPF node identifies one or more packets of the plurality of packets belonging to the session group for coordinated transmission based on the configuration and flow information of the one or more packets. The UPF node sends to a base station the one or more packets for the coordinated transmission.

In some embodiments, the 5GC node may receive the configuration from an application function (AF) node.

In some embodiments, the UPF node may receive from the 5GC node a reconfiguration indicating a media stream is added to or removed from the session group. In some embodiments, the 5GC node may receive the reconfiguration from an AF node.

In some embodiments, the session group of media streams may share a common clock.

In some embodiments, the session group of media streams may be associated with a common canonical name (CNAME) in a RTP session.

According to embodiments, a base station receives a configuration from a 5GC node. The configuration indicates that a plurality of media streams belong to a session group of media streams. The base station receives a plurality of packets from a UPF node. The base station identifies one or more packets of the plurality of packets belonging to the session group for coordinated transmission based on the configuration and flow information of the one or more packets. The base station performs the coordinated transmission of the one or more packets.

In some embodiments, the 5GC node may receive the configuration from an AF node.

In some embodiments, the base station may receive from the 5GC node a reconfiguration indicating a media stream is added to or removed from the session group. In some embodiments, the 5GC node may receive the reconfiguration from an AF node.

In some embodiments, the session group of media streams may share a common clock.

In some embodiments, the session group of media streams may be associated with a CNAME in a RTP session.

### BRIEF DESCRIPTION OF THE DRAWINGS

For a more complete understanding of the present disclosure, and the advantages thereof, reference is now made to the following descriptions taken in conjunction with the accompanying drawings, in which:
FIG. 1 illustrates an example communications system 100, according to embodiments;
FIG. 2 illustrates an example process by which a MSCI is configured utilized in a network system, according to some embodiments;
FIG. 3A illustrates a flow chart of a method performed by a UPF node, according to some embodiments;
FIG. 3B illustrates a flow chart of a method performed by a base station, according to some embodiments;
FIG. 3C illustrates a flow chart of a method performed by a UPF node, according to some embodiments;
FIG. 3D illustrates a flow chart of a method performed by a base station, according to some embodiments;
FIG. 4 shows example HTTP/2 and HTTP/3 classification methods, according to some embodiments;
FIG. 5 illustrates an embodiment communication system;
FIGs. 6A and 6B illustrate example devices that may implement the methods and teachings according to this disclosure; and
FIG. 7 shows a block diagram of a computing system that may be used for implementing the devices and methods disclosed herein, according to some embodiments.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

The making and using of embodiments of this disclosure are discussed in detail below. It should be appreciated, however, that the concepts disclosed herein can be embodied in a wide variety of specific contexts, and that the specific embodiments discussed herein are merely illustrative and do not serve to limit the scope of the claims. Further, it should be understood that various changes, substitutions and alterations can be made herein without departing from the scope of this disclosure as defined by the appended claims.

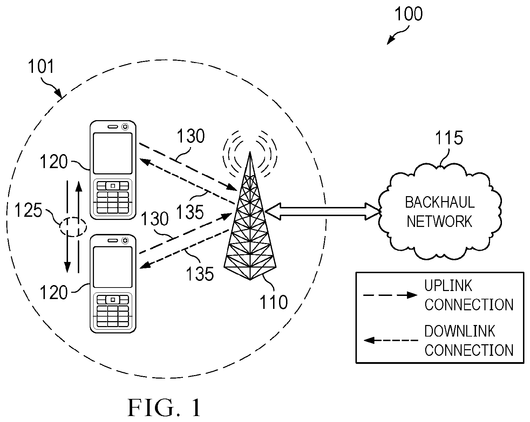

FIG. 1 illustrates an example communications system 100, according to embodiments. Communications system 100 includes an access node 110 serving user equipments (UEs) with coverage 101, such as UEs 120. In a first operating mode, communications to and from a UE passes through access node 110 with a coverage area 101. The access node 110 is connected to a backhaul network 115 for connecting to the internet, operations and management, and so forth. In a second operating mode, communications to and from a UE do not pass through access node 110, however, access node 110 typically allocates resources used by the UE to communicate when specific conditions are met. Communications between a pair of UEs 120 can use a sidelink connection (shown as two separate one-way connections 125). In FIG. 1, the sideline communication is occurring between two UEs operating inside of coverage area 101. However, sidelink communications, in general, can occur when UEs 120 are both outside coverage area 101, both inside coverage area 101, or one inside and the other outside coverage area 101. Communication between a UE and access node pair occur over uni-directional communication links, where the communication links between the UE and the access node are referred to as uplinks 130, and the communication links between the access node and UE is referred to as downlinks 135.

Access nodes may also be commonly referred to as Node Bs, evolved Node Bs (eNBs), next generation (NG) Node Bs (gNBs), master eNBs (MeNBs), secondary eNBs (SeNBs), master gNBs (MgNBs), secondary gNBs (SgNBs), network controllers, control nodes, base stations, access points, transmission points (TPs), transmission-reception points (TRPs), cells, carriers, macro cells, femtocells, pico cells, and so on, while UEs may also be commonly referred to as mobile stations, mobiles, terminals, users, subscribers, stations, and the like. Access nodes may provide wireless access in accordance with one or more wireless communication protocols, e.g., the Third Generation Partnership Project (3GPP) long term evolution (LTE), LTE advanced (LTE-A), 5G, 5G LTE, 5G NR, sixth generation (6G), High Speed Packet Access (HSPA), the IEEE 802.11 family of standards, such as 802.11a/b/g/n/ac/ad/ax/ay/be, etc. While it is understood that communications systems may employ multiple access nodes capable of communicating with a number of UEs, only one access node and two UEs are illustrated for simplicity.

The conventional techniques that may help define aspects for coordinated transmission of multiple flows are insufficient because a packet or a media stream does not carry sufficient information for a UPF to identify a group of correlated streams. Using IP connection's 5-tuple, an RTP SSRC, or other connection/media header fields provisioned may not be sufficient and efficient to uniquely identify the following information.
- Multiple media sources and one or more RTP sessions may be used by an application. SSRCs that map to a common canonical name (CNAME) in an RTP session can be assumed to have real time transport control protocol (RTCP) sender report (SR) timing information derived from a common clock to be synchronized for playout. These may be delivered over multiple transport connections.
- There can be a mix of real-time and non-real-time flows between two end points, which may not be distinguishable by the IP connection 5-tuple is not necessarily able to distinguish.
- Application session can dynamically add/remove flows with new streams/end-points leading to a large amount of configuration changes if the IP connection is used for identification.
- Conveying the application group "state" information via control/policy requires continually provisioning media transport end point or other parameters on the per session based change. So, this approach is inefficient and does not scale well.

A second technical issue is that the conventional solutions for identifying protocol data unit (PDU) sets and the PDU sets' importance consider mechanisms that address RTP/SRTP based media transport. However, HTTP-based transport is becoming increasingly applicable for low latency/real time media and needs to be addressed. The HTTP transport includes multiple versions (e.g., HTTP/1.1, HTTP/2, and HTTP/3), which differ in encryption, stream multiplexing, and network transports (e.g., transmission control protocol (TCP)/quick UDP Internet connections (QUIC)). Classification with these new aspects need to be addressed.

Embodiments of this disclosure provide technical solutions to solve the above technical issues. Particularly, coordination of correlated media flows such that common policy (e.g., defer, drop) can be applied to all the correlated media flows.

An application like extended reality (XR) may use multiple media streams to represent multiple media sources, or to carry scalable encoding of a media source (e.g., superimposed foreground media on a base background media). These media streams may be between a server and UE, multiple servers to a UE, or between multiple servers and multiple UEs.

Media streams belonging to an application like XR may include more than one RTP session group (CNAMEs), and each RTP session may have more than one media stream (e.g., multiple SSRCs). SSRCs that map to a common CNAME in an RTP session can be assumed to have RTCP sender report (SR) timing information derived from a common clock to be synchronized for playout. These streams may be delivered over multiple transport connections. The end points associate the set of SSRCs belonging to the application based on application signaling (e.g., session description protocol (SDP), RTCP). Since the media to be synchronized may span multiple RTP streams or transport connections, there is no common user plane field that can be used to identify the group of multiple RTP streams or transport connections. Thus, the application may be responsible for providing this correlation of the group of media streams to be synchronized.

This disclosure provides two technical approaches, according to embodiments. In the first technical approach, the application may configure the group of media flows (e.g., SSRCs). The application may configure the associations (e.g., SSRCs that map to a common CNAME) that form a group to the 5G core network (5GC). For example, the configuration may be configured by an application function (AF) to the 5GC, which in turn configures the user plane. The information configured may include the set of flows (e.g., identified by 3-tuples or 5-tuples) and corresponding SSRCs. However, application sessions may dynamically add/remove flows with new servers/end-points leading to a large amount of configuration changes. This approach may have a high amount of configurations.

The second technical approach is media coordination identifier based. A common media stream coordination identifier (MSCI) is used to identify all media streams that belong to a session group. Because the application has the knowledge of the group (via application signaling information in SDP or RTCP), the application applies an MSCI for all media streams of that group. The MSCI may be carried in a user datagram protocol (UDP) option (RTP streams) or a TCP option (e.g., HTTP streams). The UPF that classifies quality of service (QoS) aspects for the media streams may add the MSCI in a general packet radio service (GRPS) tunneling protocol (GTP)-user plane (GTP-U) extension.

The second technical approach may employ the following.
- Media streams do not carry sufficient information for a UPF to identify the group. There may be multiple "m" lines in the SDP, multiple SSRCs spanning more than one application session that are part of a group with the common clock to be synchronized for playout.
- Applications have the knowledge of a group of media streams because of SDP, RTCP, or other session signaling.
- An MSCI may be sent for media streams from one or more application servers. For example, an application server (AS) for XR may compose the base picture and another AS may compose a superimposed picture. Alternatively, there may be a mixer that groups multiple streams into one transport connection.
- TCP option or UDP option, for example, has low overhead and may be utilized for carrying MSCI meta-data. Another example approach can be extending the RTP to carry the MSCI information in a RTP extension header. Those example approaches of carrying the MSCI information are for illustration purpose, and are not meant to be limiting. Other types of headers may be used to carry the MSCI information. Further, tunnels between the application/media server and the UPF may allow the application server to be configured with the tunnel termination address (i.e., the address of the UPF).

In some embodiments, policy configured in other solutions, such as application information, delay tolerance, and other policies can be applied to the group of flows coordinated by an MSCI.

Packets belonging to a group of media streams that may require coordinated transmission are identified when they have the same MSCI. In some embodiments, different applications may use the same MSCI space, and the MSCI may only be unique for an application. The combination of application (e.g., the 3-tuple (the address, port, and protocol of the originating of the application server) and the MSCI can uniquely identify the media streams to be coordinated. The same policy such as delay or delay difference that is configured for the application (e.g., range of IP addresses for the application servers, or a serving network slice selection assistance identifier (S-NSSAI)/data network access identifier (DNAI) in the case of UE-UE) may be applied for all media streams of the application with the same MSCI.

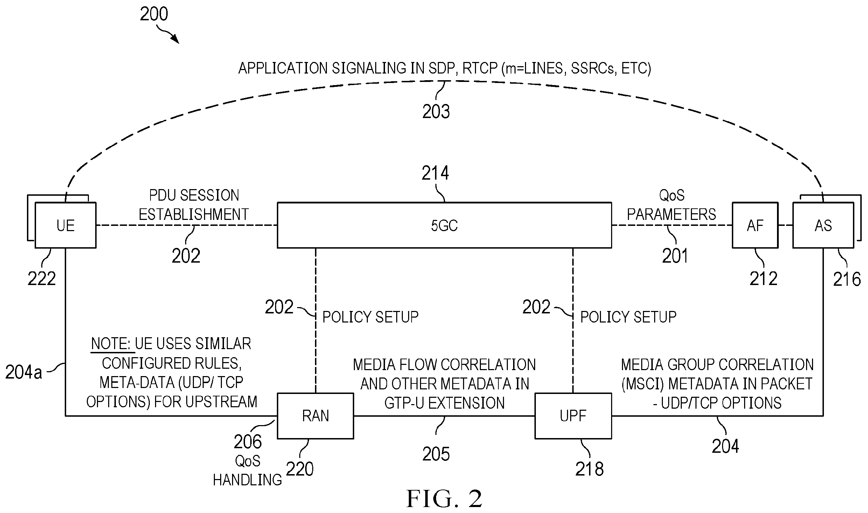

FIG. 2 illustrates an example process by which the MSCI is configured utilized in a network system 200, according to some embodiments. The network system 200 includes the AF 212, the 5GC 214, at least an application server (AS) 216, the UPF 218, the radio access network (RAN) (e.g., base station(s)) 220, and at least a UE 222. Each of the 5GC 214, the AS 216, the UPF 218, the RAN 220 may run on one or more network devices. In FIG. 2, the coordinated set of media streams may be known to the AS 216 (the operation 203), which configures the MSCI value to the set of media streams to be transported along with the media packet (the operation 204), and is then used in the 5G system (5GS) for QoS (the operations 205 and 206).

At the operation 201 shown in FIG. 2, the AF 212 configures application parameters for a group of flows to be synchronized. The parameters may include the maximum delay budget and the delay difference among the group of flows. The flows from the application may use a set of IP address(es)/port(s)/protocol(s) (3-tuple). If the flows are UE-UE flows, the flows from the application may use S-NSSAI/DNAI. In addition to the QoS policy and flow parameters, the two domains (application/AF, 5GS) may provision encryption keys (PKI or symmetric keys) by which the TCP or UDP option at the operation 204 are encrypted. The provisioning may be where 5GS provides application domain/AF 212 with the key(s), or vice versa.

At the operation 202, the UE(s) 222 may establish PDU connections, and the 5GC 214 may provision policy rules (including new per PDU set parameters) in the user plane (e.g., sending the policy rules to the UPF 218 and to the RAN 220).

At the operation 203, the UE(s) 222 and application server(s) 216 may initiate signaling at the application layer to setup media resources across multiple parties which may include multi-party (e.g., multiple UEs and/or application servers) sessions and multiplex various sessions over one or more transport connections.

At the operation 204, the application server(s) 216 may identify the group of media streams of the application that form a group to be synchronized and assign a unique value to the media stream coordination identifier (MSCI) to all media streams that are part of the group. Each media stream packet adds a TCP/UDP option carrying the MSCI as the meta-data before forwarding the packet.

Note that for upstream communications, the UE 222 may use similar configured rules and/or meta-data (e.g., MSCI), as shown at the operation 204a.

The meta-data may be encrypted using keys provisioned at the operation 201.
Reserved values of the MSCI may be used to denote a retransmission stream or forward error correction (FEC) stream.

For UE-UE flows, the application in the UE originating the media streams may encode the MSCI in the TCP or UDP option in the packet.

At the operation 205, the UPF 216 may process the incoming packet(s)/media streams, identify the PDU set, and classify packets of the PDU set (e.g., determining the importance of packets in the PDU set). In addition to the classification result, if an MSCI is present in the TCP or UDP option (e.g., in an optional field), the MSCI may be added to the general packet radio service (GRPS) tunneling protocol (GTP)-user plane (GTP-U) extension header.

At the operation 206, the RAN 220 may use the configured policy to support coordinated transmissions (e.g., delay, delay difference, etc.) across flows that have the same MSCI.

More details of the UPF processing sequence (e.g., from the operation 205) are provided below, according to some embodiments.

In some embodiments, at the operation 205, the PDU set may be identified by information included in various headers in the incoming packets (e.g. IP packets). For example, sequence number, timestamp and M bit in the RTP may be used to identify packets that belong to a PDU set. RTP transport and payload headers (RTP/payload header values) can be used to classify, characterize or assign an importance/priority of packets (e.g. packet priority marking (PPM)). In some embodiments, a RTP header, a RTP extended header, a network adaptation layer (NAL) unit or any combination thereof may include information indicating a type of payload data in the packets/media streams that can be used to classify or characterize the importance/priority of the packets/media streams.

For mapping the RTP/payload header values to PPM, packets of a PDU set have a set of headers in IP, RTP transport, and payload that can be used to assign an importance and dependence to other PDU sets. After the start of a new PDU set is detected, various header information can be used. Three cases, (1) RTP with unencrypted header and payload, (2) SRTP with unencrypted extended experimental header and encrypted payload, and (3) SRTP with unencrypted header and encrypted payload are described below.

For the case of (1) RTP with unencrypted header and payload, the RTP payload/ (NAL unit header with information on media coding priority, dependence (e.g., H.264, SVC) are used to map to per packet QoS priority values in PPM. Independent frames/PDU sets with no dependence are marked with the highest priority while PDU sets that carry temporal, spatial, or quality enhancements are configured on a per application basis on the level of importance.

For the case of (2) SRTP with unencrypted extended experimental header and encrypted payload, the experimental internet engineering task force (IETF) draft with extended header contains coded media information that can be used to map to a PPM value. For example, an "I" (independent/IDR frame with temporal independence) may be marked important, while selected layer identifier (LID)/temporal identifier (TID) values (spatial/quality/temporal frames with dependence indicated by the value) may be of medium PPM priority and the others marked low.

For the case of (3) SRTP with unencrypted header and encrypted payload, the RTP unencrypted header does not provide meta-information to determine the coded media that is carried in the packet, and the NAL unit header is part of the encrypted payload. Since the unencrypted headers do not convey enough information on the media carried, the application supplements by conveying different desired QoS handling priority by using different IPv6 flow labels, the differentiated service code point (DSCP) field, and/or sender ports. The values are configurable per application.

The detailed procedures of identifying and classifying in three cases described above can be based on procedures for mapping the RTP/payload header values to PPM described in PCT/US2022/050394. These three cases above are described using the RTP/SRTP as an example. The descriptions also apply to HTTP/HTTPS.

If the packet(s) include a TCP/UDP option, the option is inspected. The UPF 218 may look up corresponding policy for the PDU session (e.g., based on parameters provisioning at the operation 201 above, and the policy installed during PDU session establishment at the operation 202 above). If there is a key provisioned for the application/encryption of the meta-data, the UPF uses the key to decrypt the meta-data and obtain the MSCI value.

If there is an incoming MSCI that identifies that media streams should be coordinated, the UPF 218 looks up corresponding policy for the PDU session (parameters provisioning at the operation 201 above, and the policy installed during PDU session establishment at the operation 202 above). If a match exists (flow origin (corresponds to the application 3-tuple, S-NSSAI/DNAI), the delay, delay variance, or other parameters are marked to be transported in GTP-U extension field for the set of packets belonging to this PDU set).

The UPF 218 may store the MSCI value and allowed flow origins (corresponding to policy for the application) for match/retrieval in a subsequent packet inspection (that carries the same MSCI).

The UPF 218 may add the GTP-U header before forwarding to the RAN 220.
The GTP-U extension field carrying the MSCI and parameters (delay, delay variance, etc.) may be inserted into the GTP-U header. The packet with the GTP-U header is then forwarded to the RAN 220.

Embodiments of this disclosure may include configuration of parameters between the 5GS (including, for example, the UPF 218 and the RAN 220) and application domain/AF to identify the set of sources or origins of the flows to be grouped (e.g., based on the 3-tuple or the S-NSSAI/DNAI) (e.g., the operation 201). Embodiments of this disclosure may further include configuration of keys between 5GS and application domain/AF to secure the meta-data in the TCP or UDP options (e.g., the operation 201). Embodiments of this disclosure may also include assigning a common identifier (e.g., MSCI) for media stream group to be synchronized and encrypting and conveying this meta-data in a TCP or UDP option (e.g., in an optional field) along with the packet carrying the media stream. The UPF may retrieve the TCP or UDP option, decrypt the content (MSCI), and add the MSCI to other frame/PSU set QoS parameters transferred via the GTP-U to the RAN (e.g., the operations 204 and 205).

Embodiments of this disclosure may additionally include the RAN using a combination of policy (configured in the operation 201) and the MSCI value in GTP-U streams to apply the policy (defer/delay bounds, dropping, synchronize flow transmission).

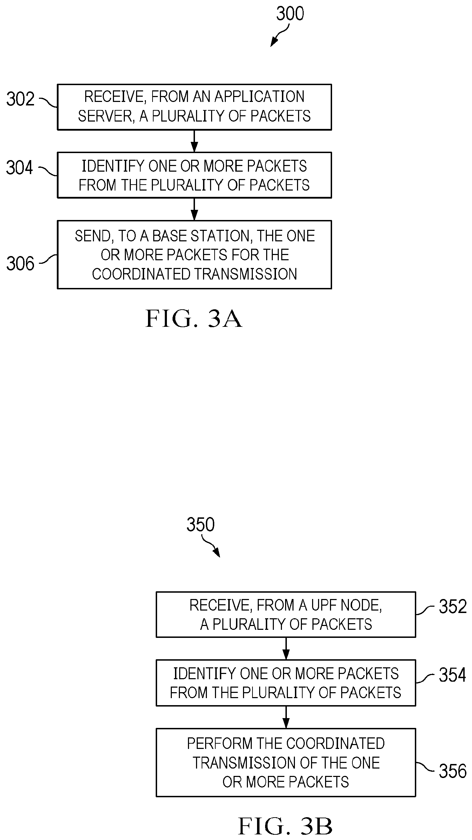

FIG. 3A illustrates a flow chart of a method 300 performed by a user plane function (UPF) node, according to some embodiments. The UPF node may include computer-readable code or instructions executing on one or more processors of the UPF node. Coding of the software for carrying out or performing the method 300 is well within the scope of a person of ordinary skill in the art having regard to the present disclosure. The method 300 may include additional or fewer operations than those shown and described and may be carried out or performed in a different order. Computer-readable code or instructions of the software executable by the one or more processors may be stored on a non-transitory computer-readable medium, such as for example, the memory of the UPF node.

The method 300 starts at the operation 302, where the UPF node receives a plurality of packets from an application server. At the operation 304, the UPF node identifies one or more packets from the plurality of packets. The one or more packets belong to a session group of media streams for coordinated transmission and having a same value of a media stream coordination identifier (MSCI). At the operation 306, the UPF node sends to a base station the one or more packets for the coordinated transmission.

In some embodiments, the UPF node may add the MSCI to a GTP-U extension header of the one or more packets. The UPF node may send the one or more packets with the GTP-U extension header having the MSCI.

In some embodiments, the UPF may obtain the MSCI from a real time protocol (RTP) extension header, a corresponding TCP optional header, or a corresponding UDP optional header.

In some embodiments, the UPF node may identify the one or more packets belonging to the session group of media streams for the coordinated transmission based on the MSCI and application identification information. In some embodiments, the application identification information may include a 3-tuple of a source address, a source port, and a protocol type indicated in the one or more packets. In some embodiments, the application identification information may include a serving network slice selection assistance identifier (S-NSSAI) or a data network access identifier (DNAI).

In some embodiments, the UPF node may identify the one or more packets belonging to the session group of media streams for the coordinated transmission based on the corresponding MSCI and importance information of the one or more packets.

In some embodiments, the session group of media streams may share a common clock.

In some embodiments, the coordinated transmission may be performed based on a common configured policy including at least one of a drop policy or a delay policy.

In some embodiments, the session group of media streams may include at least one of an audio stream, a video stream, or a haptics stream of a same media.

FIG. 3B illustrates a flow chart of a method 350 performed by a base station, according to some embodiments. The base station may include computer-readable code or instructions executing on one or more processors of the base station. Coding of the software for carrying out or performing the method 350 is well within the scope of a person of ordinary skill in the art having regard to the present disclosure. The method 350 may include additional or fewer operations than those shown and described and may be carried out or performed in a different order. Computer-readable code or instructions of the software executable by the one or more processors may be stored on a non-transitory computer-readable medium, such as for example, the memory of the base station.

The method 350 starts at the operation 352, where the base station receives a plurality of packets from a UPF node. At the operation 354, the base station identifies one or more packets from the plurality of packets. The one or more packets belong to a session group of media streams for coordinated transmission and having a same value of a media stream coordination identifier (MSCI). At the operation 356, the base station performs the coordinated transmission of the one or more packets.

In some embodiments, the base station may obtain the MSCI from a corresponding GTP-U extension header of the one or more packets.

In some embodiments, the base station may obtain the MSCI from a RTP extension header, a corresponding TCP optional header, or a corresponding UDP optional header.

In some embodiments, the base station may identify the one or more packets belonging to the session group of media streams for the coordinated transmission based on the MSCI and application identification information. In some embodiments, the application identification information may include a 3-tuple of a source address, a source port, and a protocol type indicated in the one or more packets. In some embodiments, the application identification information may include a serving network slice selection assistance identifier (S-NSSAI) or a data network access identifier (DNAI).

In some embodiments, the base station may identify the one or more packets belonging to the session group of media streams for the coordinated transmission based on the corresponding MSCI and importance information of the one or more packets.

In some embodiments, the session group of media streams may share a common clock.

In some embodiments, the coordinated transmission may be performed based on a common configured policy including at least one of a drop policy or a delay policy.

In some embodiments, the session group of media streams may include an audio stream, a video stream, and a haptics stream of a same media.

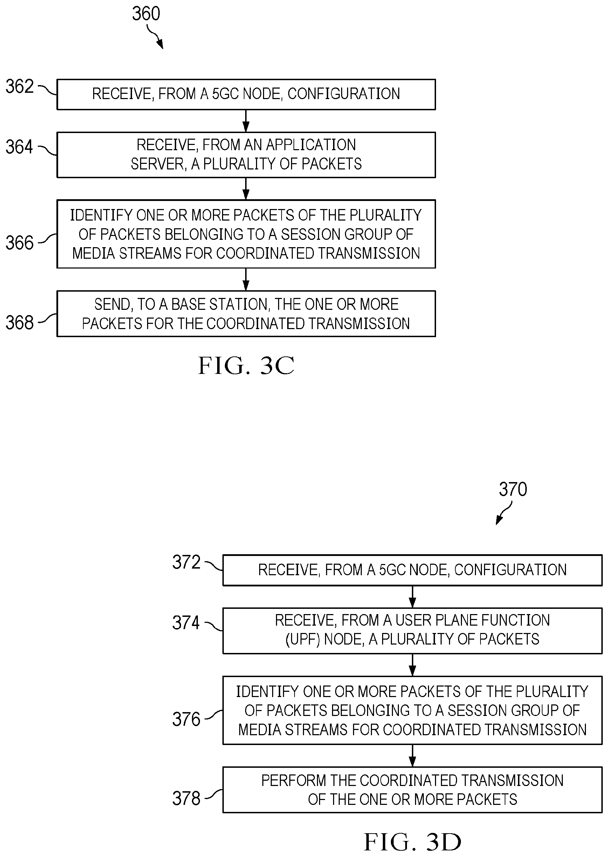

FIG. 3C illustrates a flow chart of a method 360 performed by a UPF node, according to some embodiments. The UPF node may include computer-readable code or instructions executing on one or more processors of the UPF node. Coding of the software for carrying out or performing the method 360 is well within the scope of a person of ordinary skill in the art having regard to the present disclosure. The method 360 may include additional or fewer operations than those shown and described and may be carried out or performed in a different order. Computer-readable code or instructions of the software executable by the one or more processors may be stored on a non-transitory computer-readable medium, such as for example, the memory of the UPF node.

The method 360 starts at the operation 362, where the UPF node receives a configuration from a 5GC node. The configuration indicates that a plurality of media streams belong to a session group of media streams. At the operation 364, the UPF node receives a plurality of packets from an application server. At the operation 366, the UPF node identifies one or more packets of the plurality of packets belonging to the session group for coordinated transmission based on the configuration and flow information of the one or more packets. At the operation 368, the UPF node sends to a base station the one or more packets for the coordinated transmission.

In some embodiments, the 5GC node may receive the configuration from an AF node.

In some embodiments, the UPF node may receive from the 5GC node a reconfiguration indicating a media stream is added to or removed from the session group. In some embodiments, the 5GC node may receive the reconfiguration from an AF node.

In some embodiments, the session group of media streams may share a common clock.

In some embodiments, the session group of media streams may be associated with a CNAME in a RTP session.

FIG. 3D illustrates a flow chart of a method 370 performed by a base station, according to some embodiments. The base station may include computer-readable code or instructions executing on one or more processors of the base station. Coding of the software for carrying out or performing the method 370 is well within the scope of a person of ordinary skill in the art having regard to the present disclosure. The method 370 may include additional or fewer operations than those shown and described and may be carried out or performed in a different order. Computer-readable code or instructions of the software executable by the one or more processors may be stored on a non-transitory computer-readable medium, such as for example, the memory of the base station.

The method 370 starts at the operation 372, where the base station receives a configuration from a 5GC node. The configuration indicates that a plurality of media streams belong to a session group of media streams. At the operation 374, the base station receives a plurality of packets from a UPF node. At the operation 376, the base station identifies one or more packets of the plurality of packets belonging to the session group for coordinated transmission based on the configuration and flow information of the one or more packets. At the operation 378, the base station performs the coordinated transmission of the one or more packets.

In some embodiments, the 5GC node may receive the configuration from an AF node.

In some embodiments, the base station may receive from the 5GC node a reconfiguration indicating a media stream is added to or removed from the session group. In some embodiments, the 5GC node may receive the reconfiguration from an AF node.

In some embodiments, the session group of media streams may share a common clock.

In some embodiments, the session group of media streams may be associated with a CNAME in a RTP session.

HTTP/1.1 packets belonging to a PDU set can be identified by inspecting the HTTP payload to determine start, the packets in between, and the end of the PDU set. HTTP payload with the same timestamp and content type belong to a PDU set. Enhanced layers can be detected by the change in content type (while the timestamp may not be incremented). Out-of-order packet arrivals can be managed by tracking the TCP sequence number along with the content type of the packet.

HTTP/2 and HTTP/3 packets carry multiple streams that are dynamically ordered (i.e., their ordering is based on application priorities, network delays, etc.). The combination of dynamically ordered streams or possible encryption make the processing intensive to identify and characterize the PDU sets at the line-rate without additional meta-data.

Techniques for HTTP/2 and HTTP/3 may use a combination of IP header fields and stream fingerprint (method 1) or a new TCP/UDP option the with media meta-data (method 2).

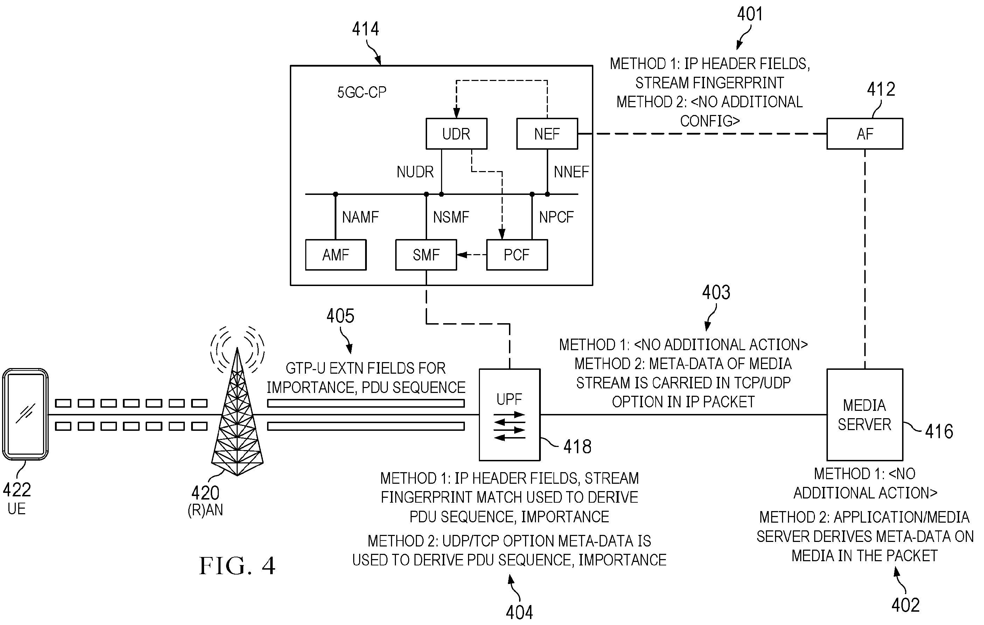

FIG. 4 shows example HTTP/2 and HTTP/3 classification methods, according to some embodiments. FIG. 4 illustrates the use of method 1 and method 2. For method 2 (combination of IP header fields and stream fingerprint), the UPF 418 uses IP header fields (e.g., flow label, differentiated service code point (DSCP)) to differentiate streams because a flow (e.g., a single transport connection) may have multiple dynamically ordered streams. Within an identified HTTP/2 stream, stream fingerprints (including packet size, burst, inter arrival time) may be used to identify PDU set boundaries. Stream fingerprints may be configured as described below.

For method 2 (new TCP/UDP option with media meta-data), the media aware application server (e.g., media server 416) on the N6 interface adds new TCP option for HTTP/2 or UDP option for HTTP/3 to carry meta-data on the codec (e.g., audio, video, haptics), media encoding in the packet (the base layer, and/or the enhanced layers), timestamp, and PDU set information (start/end of frame). Because the meta-data is in a TCP or UDP option of the packet, no additional new routing/destination information is needed (unlike the alternative of using a tunnel in N6 interface).

For method 2, the UPF 418 may handle the HTTP media flow as described below.

At the operation 401, the UPF 418 receives the incoming IP packet(s) from the media server 416 and identifies the PDU set for the HTTP media. If the packet contains a TCP/UDP option, the option is inspected. The UPF 418 looks up corresponding policy for the PDU session (parameters provisioning described below). If there is a key provisioned for the application/encryption of the meta-data, the UPF 418 uses the key to decrypt the meta-data and obtain the PDU set information.

At the operation 402, the UPF 418 looks up the corresponding policy for the PDU session (parameters provisioned as described below). A mapping procedure may be performed. The details of mapping procedure are described below.

At the operation 403, if a match exists based on the provisioned parameters and the mapping procedure, the packet(s) is marked with the PDU set information (e.g., packet priority marking (PPM), PDU sequence mark) and prepared for transport in the GTP-U extension for the set of packets belonging to the PDU set.

At the operation 404, the UPF 418 adds the GTP-U header before forwarding the packet (s) to the RAN420 . GTP-U extension carrying the PPM, the PDU sequence mark are inserted.

At the operations 405, the packet(s) with GTP-U header is forwarded to the RAN 420, which will perform the transmission to the UE 422.

In some embodiments, the mapping procedure at the operation 402 above may include mapping the HTTP transport payload to PPM. The methods described above may include both identification of the PDU sets and classification of packets with the HTTP media transport.

For HTTP/1.1 (unencrypted header and payload), the content type, the base and enhanced layers are detected by inspection of the media payload and mapped to per packet QoS priority values in the PPM. Independent frames/PDU sets with no dependence are marked with the highest priority while PDU sets that carry temporal, spatial or quality enhancements are configured on a per application basis on the level of importance. Further details are described below.

For HTTP/2 and HTTP/3 (dynamically ordered streams and possible encryption), the HTTP/2 or HTTP/3 headers do not provide meta-information to determine the coded media. The IP header fields (e.g., flow label, DSCP) may be used to differentiate streams since a flow (e.g., a single transport connection) may have multiple dynamically ordered streams. If the meta-data on the codec (e.g., audio, video, haptics), the media encoding in the packet (e.g., the base layer, the enhanced layers), the timestamp, and PDU set information (e.g., the start/end of the frame) is available in the TCP option for HTTP/2 or the UDP option for HTTP/3, this information is used to classify and map to per packet QoS priority values.

The parameters provisioning described above with respect to the operation 402 may include provisioning the application information for the HTTP transports. The provisioning is for filtering the media PDUs and applying the QoS classification based on the importance that applications need for different media encoding. For example, a video stream that encodes significant motion may wish to prioritize PDUs that have enhancement layers with temporal information over PDUs that carry quality.

For media packet filtering, the media traffic (e.g., packet(s)) is then classified using the rules configured based the application priorities for the corresponding fields in HTTP transport or payload header. Some PDU sets have a well understood importance (e.g., an independent frame has high importance, or a discardable frame has low importance). But, in other cases, applications may indicate a preference (e.g., an application that contains high speed motion may give higher importance to temporal enhancement PDU sets over spatial or quality data).

The AF 412 may send information to the 5GC 414 to configure default and application specific information. The information may include classification for HTTP. The information may also include the parameters configured. The parameters may include the following:
- parameters that fingerprint a stream with the packet signature for HTTP classification; the parameters including packet size, burst rate, inter arrival time, etc.,
- IPv6 flow label values corresponding to the application preference for importance of the PDU;
- DSCP corresponding to the application preference for importance of the PDU (e.g., if DSCP = d1, PPM = high importance).

If no configuration applies, the default is setting the PPM to be low importance.

Embodiments of this disclosure provide a method which the UPF identifies PDU set in HTTP transport packets using a combination of IP headers (DSCP, flow label) and stream fingerprint. Embodiments of this disclosure also provide a method by which a media aware application function adds TCP/UDP option to transport meta-data on the media encoding carried in the packet.

Embodiments of this disclosure provide configuration of parameters between the 5GS and the application domain/AF to identify the set of sources or origins of the flows to be grouped (3-tuple, S-NSSAI/DNAI) (e.g., the operation 201).

Embodiments of this disclosure provide configuration of keys between the 5GS and the application domain /AF to secure the meta-data in the TCP or UDP options (e.g., the operation 201).

Embodiments of this disclosure provide technical solutions of assigning a common identifier (e.g., MSCI) for media stream group to be synchronized and encrypting and conveying this meta-data in a TCP or UDP option along with the packet carrying the media stream. The UPF retrieves the TCP or UDP option, decrypts the content (e.g., MSCI), and adds it to other frame/PSU set QoS parameters transferred via GTP-U to the RAN.

Embodiments of this disclosure provide technical solutions of the RAN using a combination of policy (e.g., configured in the operation 201) and the MSCI value in GTP-U streams to apply the policy (defer/delay bounds, dropping, synchronize flow transmission).

Embodiments of this disclosure provide a method by which the UPF identifies PDU set in HTTP transport packets using a combination of IP headers (DSCP, flow label) and stream fingerprint. Embodiments of this disclosure also provide a method by which a media aware application function adds TCP/UDP option to transport meta-data on the media encoding carried in the packet.

Embodiments of this disclosure provides technical solutions to technical problems in the current systems. In current user plane nodes, when there is high congestion, packets are dropped randomly or deferred within a flow that corresponds to a 5G QoS identifier (5QI). When the traffic is of high data rate and low latency applications that have varying types of packets within a flow, some form of differentiated QoS for packets and frames within the flow is desirable. Embodiments of this disclosure describes the technical solutions by which that differentiated QoS and synchronization of flows can be realized.

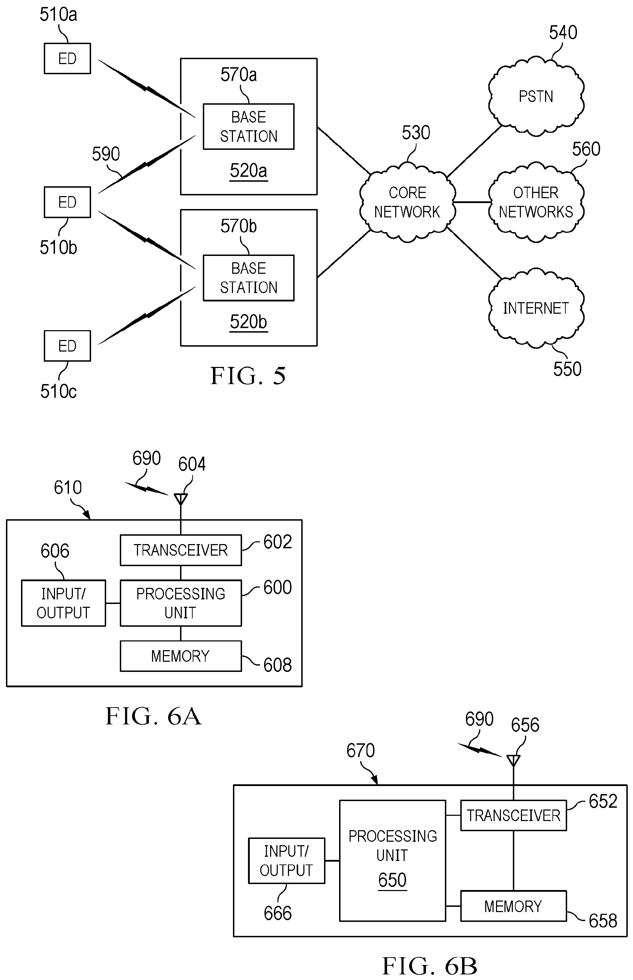

FIG. 5 illustrates an example communication system 500. In general, the system 500 enables multiple wireless or wired users to transmit and receive data and other content. The system 500 may implement one or more channel access methods, such as code division multiple access (CDMA), time division multiple access (TDMA), frequency division multiple access (FDMA), orthogonal FDMA (OFDMA), single-carrier FDMA (SC-FDMA), or non-orthogonal multiple access (NOMA).

In this example, the communication system 500 includes electronic devices (ED) 510a-510c, RANs 520a-520b, a core network 530, a public switched telephone network (PSTN) 540, the Internet 550, and other networks 560. While certain numbers of these components or elements are shown in FIG. 5, any number of these components or elements may be included in the system 500.

The EDs 510a-510c are configured to operate or communicate in the system 500. For example, the EDs 510a-510c are configured to transmit or receive via wireless or wired communication channels. Each ED 510a-510c represents any suitable end user device and may include such devices (or may be referred to) as a UE or user device, wireless transmit or receive unit (WTRU), mobile station, fixed or mobile subscriber unit, cellular telephone, personal digital assistant (PDA), smartphone, laptop, computer, touchpad, wireless sensor, or consumer electronics device.

The RANs 520a-520b here include base stations 570a-570b, respectively. Each base station 570a-570b is configured to wirelessly interface with one or more of the EDs 510a-510c to enable access to the core network 530, the PSTN 540, the Internet 550, or the other networks 560. For example, the base stations 570a-570b may include (or be) one or more of several well-known devices, such as a base transceiver station (BTS), a Node-B (NodeB), an evolved NodeB (eNodeB), a Next Generation (NG) NodeB (gNB), a Home NodeB, a Home eNodeB, a site controller, an access point (AP), or a wireless router. The EDs 510a-510c are configured to interface and communicate with the Internet 550 and may access the core network 530, the PSTN 540, or the other networks 560.

In the embodiment shown in FIG. 5, the base station 570a forms part of the RAN 520a, which may include other base stations, elements, or devices. Also, the base station 570b forms part of the RAN 520b, which may include other base stations, elements, or devices. Each base station 570a-570b operates to transmit or receive wireless signals within a particular geographic region or area, sometimes referred to as a "cell." In some embodiments, multiple-input multiple-output (MIMO) technology may be employed having multiple transceivers for each cell.

The base stations 570a-570b communicate with one or more of the EDs 510a-510c over one or more air interfaces 590 using wireless communication links. The air interfaces 590 may utilize any suitable radio access technology.

It is contemplated that the system 500 may use multiple channel access functionality, including such schemes as described above. In particular embodiments, the base stations and EDs implement 5G New Radio (NR), LTE, LTE-A, or LTE-B. Of course, other multiple access schemes and wireless protocols may be utilized.

The RANs 520a-520b are in communication with the core network 530 to provide the EDs 510a-510c with voice, data, application, Voice over Internet Protocol (VoIP), or other services. Understandably, the RANs 520a-520b or the core network 530 may be in direct or indirect communication with one or more other RANs (not shown). The core network 530 may also serve as a gateway access for other networks (such as the PSTN 540, the Internet 550, and the other networks 560). In addition, some or all of the EDs 510a-510c may include functionality for communicating with different wireless networks over different wireless links using different wireless technologies or protocols. Instead of wireless communication (or in addition thereto), the EDs may communicate via wired communication channels to a service provider or switch (not shown), and to the Internet 550.

Although FIG. 5 illustrates one example of a communication system, various changes may be made to FIG. 5. For example, the communication system 500 could include any number of EDs, base stations, networks, or other components in any suitable configuration.

FIGs. 6A and 6B illustrate example devices that may implement the methods and teachings according to this disclosure. In particular, FIG. 6A illustrates an example ED 610, and FIG. 6B illustrates an example base station 670. These components could be used in the system 500 or in any other suitable system.

As shown in FIG. 6A, the ED 610 includes at least one processing unit 600. The processing unit 600 implements various processing operations of the ED 610. For example, the processing unit 600 could perform signal coding, data processing, power control, input/output processing, or any other functionality enabling the ED 610 to operate in the system 1000. The processing unit 600 also supports the methods and teachings described in more detail above. Each processing unit 600 includes any suitable processing or computing device configured to perform one or more operations. Each processing unit 600 could, for example, include a microprocessor, microcontroller, digital signal processor, field programmable gate array, or application specific integrated circuit.

The ED 610 also includes at least one transceiver 602. The transceiver 602 is configured to modulate data or other content for transmission by at least one antenna or NIC (Network Interface Controller) 604. The transceiver 602 is also configured to demodulate data or other content received by the at least one antenna 604. Each transceiver 602 includes any suitable structure for generating signals for wireless or wired transmission or processing signals received wirelessly or by wire. Each antenna 604 includes any suitable structure for transmitting or receiving wireless or wired signals. One or multiple transceivers 602 could be used in the ED 610, and one or multiple antennas 604 could be used in the ED 610. Although shown as a single functional unit, a transceiver 602 could also be implemented using at least one transmitter and at least one separate receiver.

The ED 610 further includes one or more input/output devices 606 or interfaces (such as a wired interface to the Internet 550). The input/output devices 606 facilitate interaction with a user or other devices (network communications) in the network. Each input/output device 606 includes any suitable structure for providing information to or receiving information from a user, such as a speaker, microphone, keypad, keyboard, display, or touch screen, including network interface communications.

In addition, the ED 610 includes at least one memory 608. The memory 608 stores instructions and data used, generated, or collected by the ED 610. For example, the memory 608 could store software or firmware instructions executed by the processing unit(s) 600 and data used to reduce or eliminate interference in incoming signals. Each memory 608 includes any suitable volatile or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, and the like.

As shown in FIG. 6B, the base station 670 includes at least one processing unit 650, at least one transceiver 652, which includes functionality for a transmitter and a receiver, one or more antennas 656, at least one memory 658, and one or more input/output devices or interfaces 666. A scheduler, which would be understood by one skilled in the art, is coupled to the processing unit 650. The scheduler could be included within or operated separately from the base station 670. The processing unit 650 implements various processing operations of the base station 670, such as signal coding, data processing, power control, input/output processing, or any other functionality. The processing unit 650 can also support the methods and teachings described in more detail above. Each processing unit 650 includes any suitable processing or computing device configured to perform one or more operations. Each processing unit 650 could, for example, include a microprocessor, microcontroller, digital signal processor, field programmable gate array, or application specific integrated circuit.

Each transceiver 652 includes any suitable structure for generating signals for wireless or wired transmission to one or more EDs or other devices. Each transceiver 652 further includes any suitable structure for processing signals received wirelessly or by wire from one or more EDs or other devices. Although shown combined as a transceiver 652, a transmitter and a receiver could be separate components. Each antenna 656 includes any suitable structure for transmitting or receiving wireless or wired signals. While a common antenna 656 is shown here as being coupled to the transceiver 652, one or more antennas 656 could be coupled to the transceiver(s) 652, allowing separate antennas 656 to be coupled to the transmitter and the receiver if equipped as separate components. Each memory 658 includes any suitable volatile or non-volatile storage and retrieval device(s). Each input/output device 666 facilitates interaction with a user or other devices (network communications) in the network. Each input/output device 666 includes any suitable structure for providing information to or receiving/providing information from a user, including network interface communications.

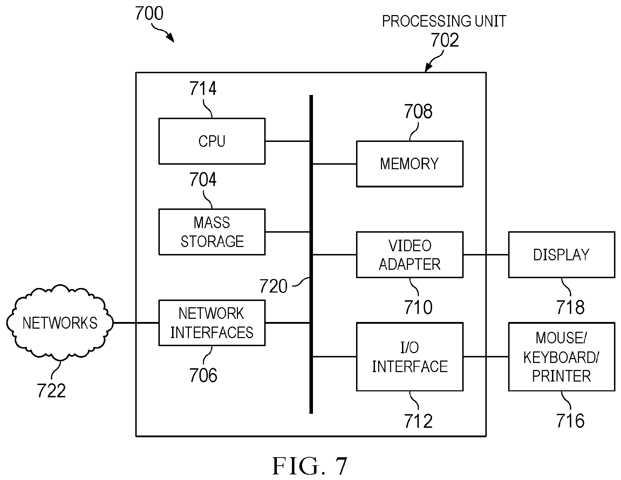

FIG. 7 is a block diagram of a computing system 700 that may be used for implementing the devices and methods disclosed herein, according to some embodiments. For example, the computing system can be any entity of UE, access network (AN), mobility management (MM), session management (SM), user plane gateway (UPGW), or access stratum (AS). Specific devices may utilize all of the components shown or only a subset of the components, and levels of integration may vary from device to device. Furthermore, a device may contain multiple instances of a component, such as multiple processing units, processors, memories, transmitters, receivers, etc. The computing system 700 includes a processing unit 702. The processing unit includes a central processing unit (CPU) 714, memory 708, and may further include a mass storage device 704, a video adapter 710, and an I/O interface 712 connected to a bus 720.

The bus 720 may be one or more of any type of several bus architectures including a memory bus or memory controller, a peripheral bus, or a video bus. The CPU 714 may comprise any type of electronic data processor. The memory 708 may comprise any type of non-transitory system memory such as static random access memory (SRAM), dynamic random access memory (DRAM), synchronous DRAM (SDRAM), read-only memory (ROM), or a combination thereof. In an embodiment, the memory 708 may include ROM for use at boot-up, and DRAM for program and data storage for use while executing programs.

The mass storage 704 may comprise any type of non-transitory storage device configured to store data, programs, and other information and to make the data, programs, and other information accessible via the bus 720. The mass storage 704 may comprise, for example, one or more of a solid state drive, hard disk drive, a magnetic disk drive, or an optical disk drive.

The video adapter 710 and the I/O interface 712 provide interfaces to couple external input and output devices to the processing unit 702. As illustrated, examples of input and output devices include a display 718 coupled to the video adapter 710 and a mouse, keyboard, or printer 716 coupled to the I/O interface 712. Other devices may be coupled to the processing unit 702, and additional or fewer interface cards may be utilized. For example, a serial interface such as Universal Serial Bus (USB) (not shown) may be used to provide an interface for an external device.

The processing unit 702 also includes one or more network interfaces 706, which may comprise wired links, such as an Ethernet cable, or wireless links to access nodes or different networks. The network interfaces 706 allow the processing unit 702 to communicate with remote units via the networks. For example, the network interfaces 706 may provide wireless communication via one or more transmitters/transmit antennas and one or more receivers/receive antennas. In an embodiment, the processing unit 702 is coupled to a local-area network 722 or a wide-area network for data processing and communications with remote devices, such as other processing units, the Internet, or remote storage facilities.

It should be appreciated that one or more steps of the embodiment methods provided herein may be performed by corresponding units or modules. The respective units or modules may be hardware, software, or a combination thereof. For instance, one or more of the units or modules may be an integrated circuit, such as field programmable gate arrays (FPGAs) or application-specific integrated circuits (ASICs).

Although the description has been described in detail, it should be understood that various changes, substitutions and alterations can be made without departing from the scope of this disclosure as defined by the appended claims. Moreover, the scope of the disclosure is not intended to be limited to the particular embodiments described herein, as one of ordinary skill in the art will readily appreciate from this disclosure that processes, machines, manufacture, compositions of matter, means, methods, or steps, presently existing or later to be developed, may perform substantially the same function or achieve substantially the same result as the corresponding embodiments described herein.

## Claims

1. A method (300), comprising:
receiving (302), by a user plane function, UPF, node (218) from an application server (216), a plurality of packets;
identifying (304), by the UPF node (218), one or more packets from the plurality of packets, the one or more packets belonging to a session group of media streams for coordinated transmission and having a same value of a media stream coordination identifier, MSCI; and
sending (306), by the UPF node (218) to a base station (220), the one or more packets for the coordinated transmission, the method further comprising
adding, by the UPF node (218), the MSCI to a general packet radio service, GRPS, tunneling protocol, GTP-user plane, GTP-U, extension header of the one or more packets, and
the sending comprising:
sending the one or more packets with the GTP-U extension header having the MSCI.

2. The method of claim 1, the identifying comprising:
obtaining, by the UPF node (218), the MSCI from a real time protocol, RTP, extension header, a corresponding transmission control protocol, TCP, optional header, or a corresponding user datagram protocol, UDP, optional header.

3. The method of any of claims 1-2, the identifying comprising:
identifying, by the UPF node (218), the one or more packets belonging to the session group of media streams for the coordinated transmission based on the MSCI and application identification information.

4. The method of claim 3, the application identification information comprising a 3-tuple of a source address, a source port, and a protocol type indicated in the one or more packets.

5. The method of claim 3, the application identification information comprising a serving network slice selection assistance identifier, S-NSSAI, or a data network access identifier, DNAI.

6. The method of any of claims 1-5, the identifying comprising:
identifying, by the UPF node (218), the one or more packets belonging to the session group of media streams for the coordinated transmission based on the corresponding MSCI and importance information of the one or more packets.

7. The method of any of claims 1-6, wherein the session group of media streams share a common clock.

8. The method of any of claims 1-7, further comprising the coordinated transmission being performed based on a common configured policy including at least one of a drop policy or a delay policy.

9. The method of any of claims 1-8, the session group of media streams comprising at least one of an audio stream, a video stream, or a haptics stream of a same media.

10. A communication apparatus, wherein the apparatus comprises a processor and a memory; and the memory comprises program instructions, and when the program instructions are run by the processor, the method according to any one of claims 1 to 9 is performed.

11. A computer-readable storage medium, comprising computer instructions, and when the computer instructions are run on a network device, the network device is enabled to perform the method according to any one of claims 1 to 9.

12. A computer program product, wherein when the computer program product runs on a computer, the computer is enabled to perform the method according to any one of claims 1 to 9.

## Patentansprüche

1. Verfahren (300), das Folgendes umfasst:
Empfangen (302), durch einen Benutzerebenenfunktions- bzw. UPF-Knoten (218) von einem Anwendungsserver (216), mehrerer Pakete;
Identifizieren (304), durch den UPF-Knoten (218), eines oder mehrerer Pakete aus den mehreren Paketen, wobei das eine oder die mehreren Pakete zu einer Sitzungsgruppe von Medienströmen für eine koordinierte Übertragung gehören und einen gleichen Wert einer Medienstromkoordinationskennung bzw. MSCI aufweisen; und
Senden (306), durch den UPF-Knoten (218) an eine Basisstation (220), des einen oder der mehreren Pakete für die koordinierte Übertragung, wobei das Verfahren ferner Folgendes umfasst:
Hinzufügen, durch den UPF-Knoten (218), der MSCI zu einem Allgemeiner-Paketfunkdienst- bzw. GRPS-Tunnelprotokoll- bzw. GTP-Benutzerebenen- bzw. GTP-U-Erweiterungsheader des einen oder der mehreren Pakete, und
das Senden Folgendes umfasst:
Senden des einen oder der mehreren Pakete mit dem GTP-U-Erweiterungsheader, der die MSCI aufweist.

2. Verfahren nach Anspruch 1, wobei das Identifizieren Folgendes umfasst:
Erhalten, durch den UPF-Knoten (218), der MSCI von einem Echtzeitprotokoll- bzw. RTP-Erweiterungsheader, einem entsprechenden optionalen Übertragungssteuerungsprotokoll- bzw. TCP-Header oder einem entsprechenden optionalen Benutzerdatagrammprotokoll- bzw. UDP-Header.

3. Verfahren nach einem der Ansprüche 1-2, wobei das Identifizieren Folgendes umfasst: Identifizieren, durch den UPF-Knoten (218), des einen oder der mehreren Pakete, die zu der Sitzungsgruppe von Medienströmen für die koordinierte Übertragung gehören, basierend auf der MSCI und Anwendungsidentifikationsinformationen.

4. Verfahren nach Anspruch 3, wobei die Anwendungsidentifikationsinformationen ein 3-Tupel einer Quellenadresse, eines Quellenports und eines Protokolltyps, die in dem einen oder den mehreren Paketen angegeben werden, umfassen.

5. Verfahren nach Anspruch 3, wobei die Anwendungsidentifikationsinformationen eine Serving-Netz-Slice-Auswahlassistenzkennung bzw. S-NSSAI oder eine Datennetzzugriffskennung bzw. DNAI umfassen.

6. Verfahren nach einem der Ansprüche 1 bis 5, wobei das Identifizieren Folgendes umfasst:
Identifizieren, durch den UPF-Knoten (218), des einen oder der mehreren Pakete, die zu der Sitzungsgruppe von Medienströmen für die koordinierte Übertragung gehören, basierend auf der entsprechenden MSCI und Wichtigkeitsinformationen des einen oder der mehreren Pakete.

7. Verfahren nach einem der Ansprüche 1 bis 6, wobei sich die Sitzungsgruppe von Medienströmen einen gemeinsamen Takt teilen.

8. Verfahren nach einem der Ansprüche 1-7, das ferner umfasst, dass die koordinierte Übertragung basierend auf einer gemeinsamen konfigurierten Richtlinie durchgeführt wird, die eine Verwerfungsrichtlinie und/oder eine Verzögerungsrichtlinie beinhaltet.

9. Verfahren nach einem der Ansprüche 1-8, wobei die Sitzungsgruppe von Medienströmen einen Audiostrom und/oder einen Videostrom und/oder einen Haptikstrom von gleichen Medien umfasst.

10. Kommunikationseinrichtung, wobei die Einrichtung einen Prozessor und einen Speicher umfasst; und der Speicher Programmanweisungen umfasst, und wenn die Programmanweisungen durch den Prozessor ausgeführt werden, das Verfahren nach einem der Ansprüche 1 bis 9 durchgeführt wird.

11. Computerlesbares Speichermedium, das Computeranweisungen umfasst, und eine Ausführung der Computeranweisungen auf einer Netzvorrichtung ermöglicht, dass die Netzvorrichtung das Verfahren nach einem der Ansprüche 1 bis 9 durchführt.

12. Computerprogrammprodukt, wobei eine Ausführung des Computerprogrammprodukts auf einem Computer ermöglicht, dass der Computer das Verfahren nach einem der Ansprüche 1 bis 9 durchführt.

## Revendications

1. Procédé (300), comprenant :
la réception (302), par un nœud de fonction de plan d'utilisateur, UPF (218), à partir d'un serveur d'application (216), d'une pluralité de paquets ;
l'identification (304), par le nœud UPF (218), d'un ou de plusieurs paquets à partir de la pluralité de paquets, le ou les paquets appartenant à un groupe de sessions de flux multimédias pour une transmission coordonnée et ayant une même valeur qu'un identifiant de coordination de flux multimédias, MSCI ; et
l'envoi (306), par le nœud UPF (218) à une station de base (220), du ou des paquets pour la transmission coordonnée, le procédé comprenant en outre :
l'ajout, par le nœud UPF (218), du MSCI à un en-tête d'extension de plan d'utilisateur GTP, GTP-U, d'un protocole de tunnellisation d'un service général de radiocommunication par paquets, GRPS, du ou des paquets, et
l'envoi comprenant :
l'envoi du ou des paquets avec l'en-tête d'extension GTP-U ayant le MSCI.

2. Procédé selon la revendication 1, l'identification comprenant :
l'obtention, par le nœud UPF (218), du MSCI à partir d'un en-tête d'extension d'un protocole en temps réel, RTP, d'un en-tête optionnel d'un protocole de commande de transmission, TCP, correspondant ou d'un en-tête optionnel d'un protocole de datagramme d'utilisateur, UDP, correspondant.

3. Procédé selon l'une quelconque des revendications 1 à 2, l'identification comprenant : l'identification, par le nœud UPF (218), du ou des paquets appartenant au groupe de sessions de flux multimédias pour la transmission coordonnée sur la base du MSCI et des informations d'identification d'application.

4. Procédé selon la revendication 3, les informations d'identification d'application comprenant un tuple à 3 éléments d'une adresse source, d'un port source et d'un type de protocole indiqué dans le ou les paquets.

5. Procédé selon la revendication 3, les informations d'identification d'application comprenant un identifiant d'assistance de sélection de tranche de réseau de desserte, S-NSSAI, ou un identifiant d'accès de réseau de données, DNAI.

6. Procédé selon l'une quelconque des revendications 1 à 5, l'identification comprenant : l'identification, par le nœud UPF (218), du ou des paquets appartenant au groupe de sessions de flux multimédias pour la transmission coordonnée sur la base du MSCI correspondant et des informations d'importance du ou des paquets.

7. Procédé selon l'une quelconque des revendications 1 à 6, dans lequel le groupe de sessions de flux multimédias partage une horloge commune.

8. Procédé selon l'une quelconque des revendications 1 à 7, comprenant en outre :
la transmission coordonnée étant effectuée sur la base d'une politique configurée commune incluant au moins une d'une politique d'abandon et d'une politique de retard.

9. Procédé selon l'une quelconque des revendications 1 à 8, le groupe de sessions de flux multimédias comprenant au moins un d'un flux audio, d'un flux vidéo ou d'un flux haptique d'un même média.

10. Appareil de communication, dans lequel l'appareil comprend un processeur et une mémoire ; et
la mémoire comprend des instructions de programme, et lorsque les instructions de programme sont exécutées par le processeur, le procédé selon l'une quelconque des revendications 1 à 9 est mis en œuvre.

11. Support de stockage lisible par ordinateur, comprenant des instructions d'ordinateur, et lorsque les instructions d'ordinateur sont exécutées sur un dispositif de réseau, le dispositif de réseau est activé pour exécuter le procédé selon l'une quelconque des revendications 1 à 9.

12. Produit de programme informatique, dans lequel lorsque le produit de programme informatique fonctionne sur un ordinateur, l'ordinateur est activé pour exécuter le procédé selon l'une quelconque des revendications 1 à 9.
